# EUROPEAN PATENT SPECIFICATION

(11) **EP 4 084 581 B1**
(45) Date of publication and mention of the grant of the patent: **26.11.2025**
(21) Application number: 21171238.5
(22) Date of filing: 29.04.2021
(51) Int. Cl.: H05B 45/20, H02M 3/00, H05B 45/39, H05B 45/10, H05B 45/382, H02M 3/335

(54) **LED DRIVER WITH TWO OUTPUT CHANNELS**
LED-TREIBER MIT ZWEI AUSGANGSKANÄLEN
PILOTE DE DEL COMPORTANT DEUX CANAUX DE SORTIE

(43) Date of publication of application: 02.11.2022
(73) Proprietor: Tridonic GmbH & Co KG, 6851 Dornbirn (AT)
(72) Inventor: Maldoner, Jakob, 6850 Dornbirn (AT)
(74) Representative: Beder, Jens

(56) References cited:
- CN-A- 111 162 660
- US-A1- 2007 080 652
- US-A1- 2010 237 799
- US-A1- 2013 127 348
- US-A1- 2016 302 268

## Description

The present invention relates to a LED (light emitting diode) driver with two output channels and to a method for operating a LED driver with two output channels. The abbreviation "LED" is used herein for the term "light emitting diode" and, thus, the abbreviation "LEDs" is used herein for the term "light emitting diodes".

Document CN 111 162 660 A discloses a multi-path resonant conversion circuit and multi-path output control method based on the multi-path resonant conversion circuit. Document US 2016/302268 A1 discloses a driver circuit for illuminants, particularly LEDs.

In the prior art, LEDs (e.g. organic LEDs, inorganic LEDs etc.) are well known as light sources for lighting. For supplying an LED arrangement comprising one or more LEDs with electrical energy a LED driver is used. Such an LED driver is configured to provide a current to the LED arrangement for electrically supplying the LED arrangement so that the LED arrangement may emit light. The greater the average current over a time period and, thus, the greater the average electrical energy over the time period provided by the LED driver to the LED arrangement the greater the amount of light, in particular the greater the light intensity of the light, emitted by the LED arrangement and vice versa. Thus, the LED driver may control the light emission of the LED arrangement by adjusting the electrical energy, in particular current, provided to the LED arrangement.

For some applications it is desired that a LED driver comprises two output channels for electrically supplying two LED arrangements with different currents. For example, this may be relevant when electrically supplying two LED arrangements that emit light of a different color temperature and it is desired to achieve a specific light mixture.

Usually such a LED driver with two output channels comprises for each output channel a power converter circuit that is controllable for controlling the current that is provided by the respective output channel. Since for each output channel a power converter circuit is arranged in the LED driver, the LED driver with two output channels is more complex, of greater size and has higher production costs compared to a LED driver with a single output (i.e. single output channel). Nevertheless, the LED driver with the single output does not allow electrically supplying two LED arrangements with different currents. Using two LED drivers with the single output demands even more space and causes higher production costs.

In the light of the above, it is an object of the present invention to provide an improved LED driver with two output channels that overcomes the above described disadvantages. It is in particular an object of the present invention to provide an improved LED driver with two output channels, which is less complex, of lower size and has less production costs compared to a LED driver with two output channels comprising for each output channel a separate power converter circuit.

These and other objects, which become apparent upon reading the following description, are solved by the subject-matter of the independent claim. The dependent claims refer to preferred embodiments of the invention.

The present invention is defined by the LED driver of independent claim 1, by the luminaire of independent claim 13 and by the method of independent claim 14. Additional features of the invention are presented in the dependent claims. In the following, parts of the description and drawings referring to embodiments, which are not covered by the claims, are not presented as embodiments of the invention, but as examples useful for understanding the invention.

The terms "electrically connected" and "connected" are used as synonyms.

According to a first aspect of the invention an LED driver with two output channels is provided. The LED driver comprises a transformer for a galvanic isolation of a primary side and a secondary side of the LED driver, wherein the transformer comprises a primary winding arranged on the primary side and a secondary winding arrangement arranged on the secondary side. The LED driver further comprises a half bridge comprising two switches arranged on the primary side of the LED driver for providing, via a resonant circuit, a primary side alternating current to the primary winding of the transformer. The primary side alternating current causes a secondary side alternating current of the secondary winding arrangement. Further, the LED driver comprises the resonant circuit arranged on the primary side of the LED driver and electrically connected between the primary winding of the transformer and a node between the two switches of the half bridge. Moreover, the LED driver comprises a control unit arranged on the primary side of the LED driver for controlling the primary side alternating current by controlling a switching of the two switches of the half bridge. The two output channels each comprise a rectifier circuit and are arranged on the secondary side of the LED driver and electrically connected to the secondary winding arrangement of the transformer such that, dependent on the primary side alternating current,
- the rectifier circuit of a first output channel of the two output channels is configured to provide a first current based on the secondary side alternating current of the secondary winding arrangement, and
- the rectifier circuit of a second output channel of the two output channels is configured to provide a second current based on the secondary side alternating current of the secondary winding arrangement.

The control unit is configured to adjust the ratio between the first current and the second current by controlling a duty cycle of the switching of one of the two switches of the half bridge.

In other words, an LED driver with two output channels is provided. The LED driver comprises a half bridge comprising two switches, a resonant circuit and a transformer, wherein the half bridge is configured to provide a primary side alternating current via the resonant circuit to a primary winding of the transformer causing a secondary side alternating current of a secondary winding arrangement of the transformer. The two output channels, each comprising a rectifier circuit, are electrically connected to the secondary winding arrangement such that, dependent on the primary side alternating current, the rectifier circuit of a first output channel is configured to provide a first current based on the secondary side alternating current and the rectifier circuit of a second output channel is configured to provide a second current based on the secondary side alternating current. A control unit of the LED driver is configured to adjust the ratio between the first current and the second current by controlling a duty cycle of a switching of one of the two switches of the half bridge.

The LED driver according to the first aspect does not comprise two separate power converter circuits for providing two different currents via two output channels. Namely for this, the LED driver comprises the half bridge and the resonant circuit for forming a primary side alternating current supplied to the primary winding of the transformer. The LED driver comprises the transformer for providing a secondary side alternating current at the secondary winding arrangement of the transformer and the two output channels each comprising a respective rectifier circuit and electrically connected to the secondary winding arrangement of the transformer. Based on the secondary side alternating current the rectifier circuit of the first output channel is configured to provide a first current and the rectifier circuit of the second output channel is configured to provide a second current. Thus, when connecting a first LED arrangement to the first output channel and a second LED arrangement to the second output channel, the first LED arrangement may be electrically supplied with the first current and the second LED arrangement may be electrically supplied with the second current. Since the ratio between the first current and the second current may be controlled by the control unit of the LED driver by controlling a duty cycle of the switching of one of the two switches of the half bridge, the first current and the second current may be different to each other. Therefore, the LED driver according to the first aspect allows to electrically supply the two LED arrangements such that each LED arrangement is supplied with a different current. Furthermore, the two currents may be varied by controlling the frequency of the switching of the two switches of the half bridge. Thus, the light emission by each of the two LED arrangements may be controlled. Since the LED driver according to the first aspect does not comprise a separate power converter circuit for each of the two output channels the complexity and size of the LED driver according to the first aspect is reduced compared to a LED driver with two output channels comprising a power converter circuit for each output channel. Moreover, the production costs are reduced. Therefore the LED driver according to the first aspect solves the above mentioned objective.

In particular, the half bridge, the resonant circuit and the transformer form a power converter circuit. In other words, the LED driver comprises a power converter circuit comprising the half bridge, the resonant circuit and the transformer.

The terms "output channel" and "output" may be used as synonyms.

The secondary side alternating current of the secondary winding arrangement of the transformer is to be understood as an alternating current that is present at the secondary winding arrangement when the primary side alternating current is present at the primary winding of the transformer. In other words, the secondary side alternating current flows through the secondary winding arrangement in case the primary side alternating current flows through the primary winding of the transformer. This secondary side alternating current is then supplied to the rectifier circuit of the first output channel and the rectifier circuit of the second output channel.

In particular, the first output channel is configured to be connected to a first LED arrangement for electrically supplying the first LED arrangement with the first current, and the second output channel is configured to be connected to a second LED arrangement for electrically supplying the second LED arrangement with the second current. The first output channel and the second output channel may be connected to the respective LED arrangement at the same time. That is, the LED driver may be configured to electrically supply, via its two output channels, two LED arrangements at the same time. The rectifier circuit of the first output channel may be configured to provide the first current to a first LED arrangement of the two LED arrangements, when the first LED arrangement is connected to the first output channel. The rectifier circuit of the second output channel may be configured to provide the second current to a second LED arrangement of the two LED arrangements, when the second LED arrangement is connected to the second output channel. Each LED arrangement may comprise or correspond to one or more LEDs (e.g. one or more organic LEDs, one or more inorganic LEDs etc.).

Any transformer known in the art may be used for implementing the transformer of the LED driver.

Preferably, the transformer is implemented such that the absolute value of a secondary side voltage at the secondary winding arrangement is smaller than the absolute value of a primary side voltage at the primary winding causing the secondary side voltage. That is, preferably the number of windings of the secondary windings arrangement is smaller than the number of windings of the primary winding.

Each switch of the two switches of the half bridge may comprise or correspond to one or more transistors. The one or more transistors may be at least one of bipolar junction transistors (BJTs), field effect transistors (FETs), metal-oxide-semiconductor field-effect transistors (MOSFETs) and Gallium Nitride transistors (GaN transistors). Any other transistor known in the art may be used as well.

The half bridge comprising the two switches may be referred to as half bridge switching circuit.

In particular, the half bridge is electrically connected to an voltage supply of the LED driver. The voltage supply may comprise a high potential terminal and low potential terminal, wherein the absolute value of the potential at the high potential terminal is greater than the absolute value of the potential at the low potential terminal, when the voltage supply provides a voltage. Preferably, the low potential terminal is connected to ground, which may be referred to as primary ground or primary side ground. A switch of the half bridge, which is connected to the high potential terminal of the voltage supply, may be referred to as "first switch", "high side switch" or "upper switch". The other switch of the half bridge connected to the low potential terminal of the voltage supply may be referred to as "second switch", "low side switch" or "lower switch".

The voltage supply of the LED driver may be:
- an input of the LED driver configured to be connected to an external voltage source,
- a supply bus for providing a bus voltage, or
- an actively switched power factor correction (PFC) circuit.

The input of the LED driver preferably comprises at least two input terminals for electrically connecting the LED driver to the external voltage source. The external voltage source may be a mains supply or an external battery. The actively switched PFC circuit may comprise or correspond to a power converter circuit, in particular to a boost power converter circuit. The terms "boost power converter circuit" and "boost converter" may be used as synonyms.

Optionally, in case the voltage supply is the input of the LED driver, the half bridge may be electrically connected via a filter circuit, a rectifier circuit and/or a PFC circuit to the input of the LED driver.

The control unit may comprise or correspond to a processor, a microprocessor, a controller, a microcontroller, a field programmable gate array (FPGA), an application specific integrated circuit (ASIC) or any combination of them.

In particular, the control unit is configured to switch the half bridge (i.e. the two switches of the half bridge) such that the two switches of the half bridge are not in the conducting state at the same time. The control unit may be configured to inversely switch the two switches of the half bridge. That is, in case one of the two switches is in the conducting state, the other switch is in the non-conducting state and vice versa. The terms "conducting state", "on state" and "switched on state" may be used as synonyms. The terms "non-conducting state", "off state" and "switched off state" may be used as synonyms. The passages "switching the half bridge" and "switching the two switches of the half bridge" may be used as synonyms.

The control unit may be configured to control the switching of the two switches of the half bridge such that increasing the duty cycle of the switching of one switch decreases the duty cycle of the switching of the other switch and vice versa. For this, it is assumed that the frequency of the switching of the two switches is constant.

The duty cycle D of the switching of a switch of the two switches of the half bridge corresponds to the ratio between the time ton (may be referred to as on-time) during which the switch is in the conducting state and the period T (inverse frequency) of the switching of the two switches (D = ton/T). Thus, increasing the duty cycle of the switching of the switch may correspond to increasing the on-time of the switching of the switch while keeping the frequency respectively period of the switching of the two switches constant. The control unit may be configured to switch the two switches of the half bridge with the same frequency. The control unit may be configured to switch the half bridge with a changing duty cycle between the switches of the half bridge and a changing frequency of the half bridge.

As mentioned already above, the LED driver comprises the resonant circuit that is arranged on the primary side of the LED driver and electrically connected between the half bridge and the primary winding of the transformer for providing the primary side alternating current to the primary winding of the transformer. The resonant circuit is electrically connected on one side to the node between the two switches of half bridge and on the other side to the primary winding of the transformer.

The resonant circuit may comprises at least one capacitor and at least one inductor electrically connected in series to each other. The at least one capacitor and the at least inductor may be electrically connected in series to the primary winding of the transformer. The at least one inductor may comprise or correspond to a leakage inductance of the transformer (transformer leakage inductance).

The resonant circuit may comprises a capacitor electrically connected in parallel to the primary winding of the transformer. In other words, the resonant circuit may be a series resonant circuit or a parallel resonant circuit.

The transformer, the half bridge and the resonant circuit may form a resonant power converter circuit. The terms "resonant power converter circuit", "resonant power converter" and "resonant converter" may be used as synonyms. That is, the LED driver may comprise a resonant converter. The resonant power converter circuit may be a LLC resonant power converter circuit. The resonant power converter may be a LCC resonant power converter.

In particular, the two output channels are arranged on the secondary side of the LED driver and electrically connected to the secondary winding arrangement of the transformer such that
- the rectifier circuit of the first output channel is configured to provide the first current, when a positive half-wave of the primary side alternating current is provided to the primary winding of the transformer, and
- the rectifier circuit of the second output channel is configured to provide the second current, when a negative half-wave of the primary side alternating current is provided to the primary winding of the transformer.

According to an implementation form of the first aspect, the rectifier circuit of the first output channel comprises a first diode and a first capacitor and the rectifier circuit of the second output channel comprises a second diode and a second capacitor. The secondary winding arrangement may comprise a first terminal and a second terminal. The anode of the first diode is electrically connected to the first terminal of the secondary winding arrangement of the transformer and the cathode of the first diode is electrically connected to the first capacitor. The anode of the second diode is electrically connected to the second terminal of the secondary winding arrangement of the transformer and the cathode of the second diode is electrically connected to the second capacitor.

The first diode, the first capacitor, the second diode and the second capacitor may be arranged on the secondary side for rectifying and filtering the second side alternating current. In particular, the first diode and the first capacitor are configured to generate the first current based on the secondary side alternating current, when the positive half-wave of the primary side alternating current is provided to the primary winding of the transformer. In particular, the second diode and the second capacitor are configured to generate the second current based on the secondary side alternating current, when the negative half-wave of the primary side alternating current is provided to the primary winding of the transformer

In particular, the first capacitor is configured to be electrically connected to the first LED arrangement, and the second capacitor is configured to be electrically connected to the second LED arrangement.

According to an alternative, the secondary winding arrangement of the transformer may be a secondary winding with a first terminal, a center tap and a second terminal.

The two output channels may be electrically connected to the secondary winding such that the first output channel is electrically connected to the first terminal and the center tap of the secondary winding and the second output channel is electrically connected to the second terminal of the secondary winding.

According to the alternative, the anode of the first diode may be electrically connected to the first terminal of the secondary winding. The first capacitor may be electrically connected between the cathode of the first diode and the center tap, the center tap is connected to secondary side ground. The anode of the second diode may be electrically connected to the second terminal of the secondary winding. The second capacitor may be electrically connected between the cathode of the second diode and the secondary side ground. The secondary side ground may be referred to as secondary ground. Optionally, the secondary side ground may correspond to zero volts (o Volts).

According to a further alternative, the secondary winding arrangement of the transformer may be a series connection of windings comprising two secondary windings, the series connection of windings comprising a first terminal, a node between the two secondary windings and a second terminal. The two output channels may be electrically connected to the series connection of windings such that the first output channel is electrically connected to the first terminal and the node between the two secondary windings and the second output channel is electrically connected to the second terminal.

According to the further alternative, the anode of the first diode may be electrically connected to the first terminal of the series connection of windings. The first capacitor may be electrically connected between the cathode of the first diode and the node between the two secondary windings, the node is connected to secondary side ground. The anode of the second diode may be electrically connected to the second terminal of the series connection of windings. The second capacitor may be electrically connected between the cathode of the second diode and the secondary side ground.

The control unit may be configured to increase the duty cycle above a duty cycle threshold to adjust the ratio between the first current and the second current such that one of the first current and the second current is greater than the other current of the first current and the second current. The greater the duty cycle above the duty cycle threshold the greater the one current and the smaller the other current. The control unit may be configured to decrease the duty cycle below the duty cycle threshold to adjust the ratio between the first current and the second current such that the other current is greater than the one current. The smaller the duty cycle below the duty cycle threshold the greater the other current and the smaller the one current.

The control unit may be configured to set the ratio between the first current and the second current to 50% (i.e. the first current equals to the second current) by controlling the duty cycle to equal to the duty cycle threshold. Preferably, the control unit may be configured to vary the duty cycle between a first duty cycle of 20% (0.2) and a second duty cycle of 80% (0.8) for adjusting respectively varying the ratio between the first current and the second current.

The duty cycle threshold may correspond to a duty cycle of 50% (0.5). In case the secondary winding arrangement of the transformer is the series connection of windings comprising the two secondary windings, the two secondary windings may comprise the same number of windings. In particular, this applies when the duty cycle threshold is set to a duty cycle of 50%.

In case the duty cycle is the duty cycle of the switching of a first switch of the two switches of the half bridge, wherein the first switch is configured to provide in its conducting-state the positive half-wave of the primary side alternating current to the primary winding of the transformer (via the resonant circuit):
The control unit may be configured to increase the duty cycle above a duty cycle threshold to adjust the ratio between the first current and the second current such that the first current is greater than the second current. The greater the duty cycle above the duty cycle threshold the greater the first current and the smaller the second current. The control unit may be configured to decrease the duty cycle below the duty cycle threshold to adjust the ratio between the first current and the second current such that the second current is greater than the first current. The smaller the duty cycle below the duty cycle threshold the greater the second current and the smaller the first current.

Alternatively, in case the duty cycle is the duty cycle of the switching of a second switch of the two switches of the half bridge, the second switch is configured to provide in its conducting-state the negative half-wave of the primary side alternating current to the primary winding of the transformer (via the resonant circuit):
The control unit may be configured to decrease the duty cycle below a duty cycle threshold to adjust the ratio between the first current and the second current such that the first current is greater than the second current. The smaller the duty cycle below the duty cycle threshold the greater the first current and the smaller the second current. The control unit may be configured to increase the duty cycle above the duty cycle threshold to adjust the ratio between the first current and the second current such that the second current is greater than the first current. The greater the duty cycle above the duty cycle threshold the greater the second current and the smaller the first current.

In particular, the control unit is configured to adjust an overall current formed by the first current and the second current by controlling the frequency of the switching of the two switches of the half bridge.

In particular, the control unit is configured to
- decrease the overall current formed by the first current and the second current by increasing the frequency of the switching of the two switches of the half bridge, and
- increase the overall current formed by the first current and the second current by decreasing the frequency of the switching of the two switches of the half bridge.

The control unit may be configured to switch the two switches of the half bridge with a frequency that is equal to or greater than the resonant frequency of the resonant circuit. That is, the control unit may be configured to control the frequency of the switching of the half bridge to be equal to or greater than the resonant frequency.

The LED driver comprises a further transformer for providing a third current indicative of the first current and second current to the primary side of the LED driver. The further transformer comprises a first and second primary winding arranged on the secondary side of the LED driver and a secondary winding arranged on the primary side of the LED driver. The first and second primary winding of the further transformer may be electrically connected to the secondary winding arrangement of the transformer. The control unit may be configured to control, based on the third current, the switching of the two switches of the half bridge.

The first output channel may comprise the first primary winding of the further transformer and the second output channel may comprise the second primary winding of the further transformer. The further transformer may be referred to as current sensing transformer.

Alternatively, the LED driver may comprise a first and second measuring inductor on the secondary side and a third measuring inductor on the primary side, wherein the first and second measuring inductor are coupled with the third measuring inductor for providing a third current indicative of the first current and second current to the primary side of the LED driver. The description with respect to the first and second primary winding of the further transformer is correspondingly valid for the first and second measuring inductor and the description with respect to the secondary winding of the further transformer is correspondingly valid for the third measuring inductor.

In case the secondary winding arrangement of the transformer is the secondary winding: The first primary winding of the further transformer may be electrically connected to the first terminal of the secondary winding, and the second primary winding of the further transformer may be electrically connected to the second terminal of the secondary winding.

In case the secondary winding arrangement of the transformer is the series connection of windings: The first primary winding of the further transformer may be electrically connected to the first terminal of the series connection of windings, and the second primary winding of the further transformer may be electrically connected to the second terminal of the series connection of windings.

In particular, in case the secondary winding arrangement of the transformer is the secondary winding: The first primary winding of the further transformer may be electrically connected between the first terminal of the secondary winding and the anode of the first diode. Further, the second primary winding of the further transformer may be electrically connected between the second terminal of the secondary winding and the anode of the second diode.

In particular, in case the secondary winding arrangement of the transformer is the series connection of windings: The first primary winding of the further transformer may be electrically connected between the first terminal of the series connection of windings and the anode of the first diode. Further, the second primary winding of the further transformer may be electrically connected between the second terminal of the series connection of windings and the anode of the second diode.

The secondary winding of the further transformer may comprise a first and second terminal. The LED driver may comprise a third capacitor arranged on the primary side of the LED driver and electrically connected via a rectifier circuit to the first terminal of the secondary winding of the further transformer for providing to the control unit a first voltage indicative of the first current when the third current flows through the third capacitor. The LED driver may further comprise a fourth capacitor arranged on the primary side of the LED driver and electrically connected via the rectifier circuit to the second terminal of the secondary winding of the further transformer for providing to the control unit a second voltage indicative of the second current when the third current flows through the fourth capacitor.

In order to achieve the LED driver according to the first aspect of the present invention, some or all of the above described optional features may be combined with each other.

According to a second aspect of the invention, a luminaire is provided. The luminaire comprises an LED driver according to the first aspect, as described above, and two LED arrangements. A first LED arrangement of the two LED arrangements is electrically connected to the first output channel of the LED driver and a second LED arrangement of the two LED arrangements is electrically connected to the second output channel of the LED driver.

The above description with regard to the LED driver according to the first aspect of the present invention is also valid for the luminaire according to the second aspect of the present invention, in particular for the LED driver of the luminaire.

Each LED arrangement of the two LED arrangements may comprise or correspond to one or more LEDs (e.g. one or more organic LEDs, one or more inorganic LEDs etc.). The two LED arrangements may correspond to two tunable white LED modules.

In particular, the control unit of the LED driver is configured to control the light emission of the two LED arrangements by controlling the first current, which may be provided by the first output channel to the first LED arrangement, and the second current, which may be provided by the second output channel to the second LED arrangement. The control unit is configured to control the first current and second current by controlling the switching of the two switches of the half bridge of the LED driver.

In particular, the control unit is configured to control the ratio between the light emission of the first LED arrangement and the light emission of the second LED arrangement by controlling the ratio between the first current and the second current. The control unit may be configured to control the total amount of light emitted by the two LED arrangements by controlling the overall current formed by the first current and the second current. For describing how the LED driver, in particular the control unit, is configured to control the ratio between the first current and the second current reference is made to the above description of the LED driver according to the first aspect. For describing how the LED driver, in particular the control unit, is configured to control the overall current formed by the first current and second current reference is made to the above description of the LED driver according to the first aspect.

The luminaire according to the second aspect achieves the same advantages as the LED driver according to the first aspect.

In order to achieve the luminaire according to the second aspect of the present invention, some or all of the above described optional features may be combined with each other.

According to a third aspect of the invention, a method for operating a LED driver with two output channels according to claim 14 is provided.

The above description with regard to the LED driver according to the first aspect of the present invention is also valid for the method according to the third aspect of the present invention.

In particular, the LED driver (that may be operated by the method of the third aspect) may be a LED driver according to the first aspect of the present invention.

The method according to the third aspect achieves the same advantages as the LED driver according to the first aspect.

In the following, the invention is described exemplarily with reference to the enclosed Figures, in which
- **Figure 1**: is a schematic circuit diagram of an LED driver according to an example not covered by the present invention.
- **Figure 2**: is a schematic circuit diagram of an LED driver according to an embodiment of the present invention,
- **Figure 3**: is a graph showing the value of the first current and second current provided by the two output channels of an LED driver according to an embodiment of the figure 1 or 2, and
- **Figure 4**: is a schematic block diagram of an LED driver according to an embodiment of the present invention.

In the Figures, corresponding elements have the same reference signs.

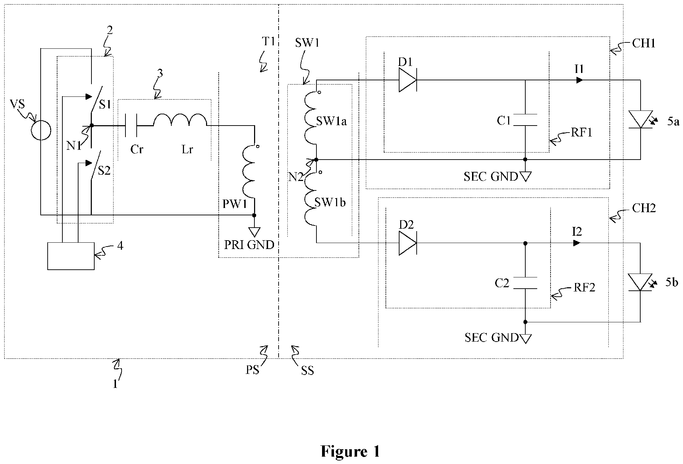

**Figure 1** is a schematic circuit diagram of a LED driver according to an example not covered by the present invention.

As shown in Figure 1, the LED driver 1 comprises two output channels CH1 and CH2, a transformer T1, a half bridge 2 comprising two switches S1 and S2, and a resonant circuit 3. The two switches S1 and S2 are electrically connected in series to form the half bridge 2. Thus, the LED driver 1 of Figure 1 comprises a half bridge switching circuit 2 comprising the two switches S1 and S2. The half bridge 2 may be referred to as series connection of switches. As shown in Figure 1, the half bridge 2 is connected to a voltage supply VS. The voltage supply VS may be an input terminal of the LED driver 1, an optional actively switched PFC circuit of the LED driver 1 or an optional voltage bus of the LED driver 1, as described above. The switch S1 corresponds to the high side switch (first switch) and the switch S2 corresponds to the low side switch (second switch).

The two output channels CH1, CH2 each comprise a rectifier circuit RF1 respectively RF2. That is, a first output channel CH1 of the two output channels CH1, CH2 comprises the rectifier circuit RF1 (may be referred to as first rectifier circuit) and a second output channel CH2 of the two output channels CH1, CH2 comprises the rectifier circuit RF2 (may be referred to as second rectifier circuit)

The transformer T1 provides a galvanic isolation of a primary side PS and a secondary side SS of the LED driver 1. Thus, on the primary side PS a primary side ground PRI GND (in short "primary ground") is present and on the secondary side SS a secondary side ground SEC GND (in short "secondary ground") is present. The half bridge 2 and the resonant circuit 3 are arranged on the primary side PS of the LED driver 1. The two output channels CH1 and CH2 are arranged on the secondary side SS of the LED driver 1. The transformer T1 comprises a primary winding PW1 arranged on the primary side PS of the LED driver 1 and a secondary winding arrangement SW1 arranged on the secondary side SS of the LED driver 1.

Switching of the two switches S1 and S2 allows providing a primary side alternating current via the resonant circuit 3 to the primary winding PW1 of the transformer T1. The primary side alternating current causes a secondary side alternating current of the secondary winding arrangement SW1 of the transformer T1, based on which the rectifier circuit RF1 of the first output channel CH1 is configured to provide a first current I1 dependent on the primary side alternating current. The rectifier circuit RF2 of the second output channel CH2 is configured to provide, dependent on the primary side alternating current, a second current I2 based on the secondary side alternating current.

As shown in Figure 1, the secondary winding arrangement SW1 of the transformer T1 is a series connection of windings comprising two secondary windings SW1a and SW1b. As outlined already above, the secondary winding arrangement SW1 may alternatively be a secondary winding with a center tap. For the following description, it is assumed that the secondary winding arrangement SW1 of the transformer T1 is a series connection of windings comprising two secondary windings SW1a and SW1b for exemplarily describing an embodiment of the present invention.

As shown in Figure 1, the resonant circuit 3 comprises a capacitor Cr and an inductor Lr, which are connected in series. In particular, the capacitor Cr and the inductor Lr are electrically connected in series with the primary winding PW1 of the transformer T1. Alternatively, the capacitor Cr or the inductor Lr may be electrically connected in parallel to the primary winding PW1 of the transformer T1 (not shown in Figure 1). Alternatively, the inductor Lr may be integrated in the transformer T1. In this case, the inductor Lr is not an external inductor with regard to the transformer T1 and may correspond to a primary leakage inductance of the primary winding PW1 of the transformer T1. Thus, the LED driver 1 comprises a resonant converter comprising the series connection 2 of switches S1 and S2 (half bridge), the resonant circuit 3 and the transformer T1. The resonant converter may be implemented according to any resonant converter known in the art. In particular, the resonant circuit 3 may be implemented by any resonant circuit known in the art.

As shown in Figure 1, the resonant circuit 3 is electrically connected between the primary winding PW1 of the transformer T1 and the node N1 between the two switches S1 and S2 of the half bridge 2.

Further, as shown in Figure 1 the rectifier circuit RF1 of the first output channel CH1 comprises a first diode D1 and a first capacitor C1, wherein the anode of the first diode D1 is electrically connected to a first terminal of the series connection SW1 of windings. The first capacitor C1 is electrically connected between the cathode of the first diode D1 and the node N2 between the two secondary windings SW1a and SW1b of the series connection SW1 of windings. The node N2 between the two secondary windings SW1a and SW1b is connected to the secondary side ground SEC GND. The rectifier circuit RF2 of the second output channel CH2 comprises a second diode D2 and a second capacitor C2. The anode of the second diode D2 is electrically connected to a second terminal of the series connection SW1 of windings. The second capacitor C2 is electrically connected between the cathode of the second diode D2 and the secondary side ground SEC GND.

The present example is not limited to the implementation form of the rectifier circuits RF1 and RF2 shown in Figure 1. Thus, the rectifier circuit RF1 of the first output channel CH1 may be implemented differently by any means known in the art, as long as it provides the same function as the implementation form of the rectifier circuit RF1 shown in Figure 1 (i.e. rectifying and filtering the rectified current to provide the first current I1). The same applies to the rectifier circuit RF2 of the second output channel CH2.

As shown in Figure 1, a first LED arrangement 5a may be electrically connected to the first output channel CH1, in particular in parallel to the first capacitor C1. Thus, the first output channel CH1 may provide the first current I1 to the first LED arrangement 5a in case the first LED arrangement 5a is connected to the first output channel CH1. A second LED arrangement 5b may be electrically connected to the second output channel CH₂, in particular in parallel to the second capacitor C2. Thus, the second output channel CH2 may provide the second current I2 to the second LED arrangement 5b in case the second LED arrangement 5b is connected to the second output channel CH2. The LED driver 1 and the two LED arrangements 5a and 5b may form a luminaire. The above description with respect to the luminaire of the second aspect is valid for describing such a luminaire.

The LED driver 1 further comprises a control unit 4 which is configured to control a switching of the two switches S1 and S2 of the half bridge 2 (as indicated by the two arrows in Figure 1). In other words, the control unit 4 is configured to switch the two switches S1 and S2. In particular the control unit 4 is configured to control the switching of the two switches S1 and S2 between the following two switching states:
In a first switching state, the first switch S1 is in the conducting state and the second switch S2 is in the non-conducting state. Therefore, a current flows from the high potential terminal of the voltage supply VS via the conducting first switch S1 to the resonant circuit 3. As a result, a positive half-wave of the primary side alternating current is provided to the primary winding PW1 of the transformer T1. This causes a positive half-wave of the secondary side alternating current at the secondary winding arrangement SW1 of the transformer T1. Since the polarity of the two secondary windings SW1a and SW1b equals to the polarity of the primary winding PW1 of the transformer T1, the first diode D1 is forward biased and the second diode D2 is reverse biased in the first switching state. Thus, in the first switching state, the secondary side alternating current flows through the upper secondary winding SW1a (first secondary winding), the first diode D1 and the first capacitor C1. The first diode D1 and the first capacitor C1 rectify and filter, in particular smooth, the secondary side alternating current to generate the first current I1. That is, the rectifier circuit RF1 of the first output channel CH1 is configured to rectify and filter, in particular smooth, the secondary side alternating current to generate the first current I1. As a result, in the first switching state, the first output channel CH1 provides the first current I1. In particular, the first current I1 corresponds to the average of the positive half-wave of the secondary side alternating current over a time (e.g. the period respectively inverse frequency of the switching of the two switches S1 and S2). The positive half-wave of the secondary side alternating current is caused by the positive half-wave of the primary side alternating current.

In a second switching state, the first switch S1 is in the non-conducting state and the second switch S2 is in the conducting state. Therefore, a current flows from the primary winding PW1 of the transformer 1 via the resonant circuit 3 to the conducting second switch S2. As a result, a negative half-wave of the primary side alternating current is provided to the primary winding PW1 of the transformer T1. This causes a negative half-wave of the secondary side alternating current at the secondary winding arrangement SW1 of the transformer T1. Since the polarity of the two secondary windings SW1a and SW1b equals to the polarity of the primary winding PW1 of the transformer T1, the first diode D1 is reverse biased and the second diode D2 is forward biased in the second switching state. Thus, in the second switching state, the secondary side alternating current flows through the lower secondary winding SW1b (second secondary winding), the second diode D2 and the second capacitor C2. The second diode D2 and the second capacitor C2 rectify and filter, in particular smooth, the secondary side alternating current to generate the second current I2. That is, the rectifier circuit RF2 of the second output channel CH₂ is configured to rectify and filter, in particular smooth, the secondary side alternating current to generate the second current I2. As a result, in the second switching state, the second output channel CH2 provides the second current I2. In particular, the second current I2 corresponds to the average of the negative half-wave of the secondary side alternating current over a time (e.g. the period respectively inverse frequency of the switching of the two switches S1 and S2). The negative half-wave of the secondary side alternating current is caused by the negative half-wave of the primary side alternating current.

In case the polarity of the secondary windings SW1a and SW1b is opposite to the polarity of the primary winding PW1 of the transformer T1 (not shown in Figure 1), the second output channel CH2 provides the second current I2 in the first switching state and the first output channel CH1 provides the first current I1 in the second switching state.

The control unit 4 may control the switching of the two switches S1 and S2 such that the two switches S1 and S2 are alternately switched between the first switching state and the second switching state. The sum of the time in the first switching state and the time in the subsequent second switching state corresponds to the period (inverse frequency) of the switching of the two switches S1 and S2. In particular, the control unit 4 may control the switching of the two switches S1 and S2 such that the two switches S1 and S2 are not in the conducting state at the same time. Preferably, the control unit 4 may control the switching of the two switches S1 and S2 such that the two switches S1 and S2 are inversely switched. That is, in case the first switch S1 is switched in the conducting state the second switch S2 is switched in the non-conducting state and vice versa.

The longer the control unit 4 controls the two switches S1 and S2 to be in the first switching state, the shorter the two switches S1 and S2 are in the second switching state during a period (inverse frequency) of the switching of the two switches S1 and S2 and vice versa. Thus, the longer the control unit 4 controls the two switches S1 and S2 to be in the first switching state, the greater the duty cycle of the switching of the first switch S1 and the smaller the duty cycle of the switching of the second switch S2. Further, the longer the control unit 4 controls the two switches S1 and S2 to be in the second switching state, the smaller the duty cycle of the switching of the first switch S1 and the greater the duty cycle of the switching of the second switch S2.

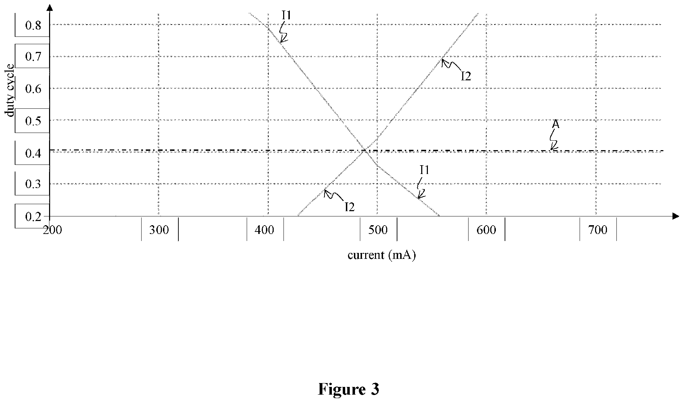

As mentioned already above, by controlling a duty cycle of the switching of one of the two switches S1 and S2 the control unit 4 may adjust the ratio between the first current I1 and the second current I2. For example, in case the control unit 4 controls the duty cycle of the switching of the first switch S1, the control unit 4 may be configured to increase the duty cycle above a duty cycle threshold to adjust the ratio between the first current I1 and the second current I2 such that the first current I1 is greater than the second current I2. The greater the duty cycle above the duty cycle threshold the greater the first current I1 and the smaller the second current I2. Further, the control unit 4 may be configured to decrease the duty cycle of the switching of the first switch S1 below the duty cycle threshold to adjust the ratio between the first current I1 and the second current I2 such that the second current I2 is greater the first current I1. The smaller the duty cycle below the duty cycle threshold the greater the second current I2 and the smaller the first current I1. Instead of controlling the duty cycle of the switching of the first switch S1, the control unit may control the duty cycle of the switching of the second switch S2, as described above with respect to the LED driver of the first aspect. This case is exemplarily described with respect to Figure 3.

For a more detailed description of the structure and function of the LED driver 1, in particular of the control of the two switches S1 and S2 by the control unit 4, reference is made to the above description of the LED driver of the first aspect.

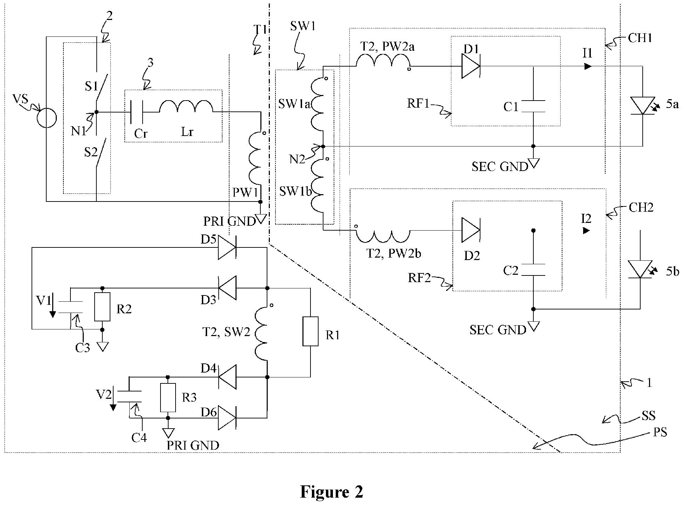

**Figure 2** is a schematic circuit diagram of a LED driver according to an embodiment of the present invention.

The LED driver of Figure 2 corresponds to the LED driver of Figure 1. Thus, for describing the LED driver of Figure 2 reference is made to the above description of the LED driver of Figure 1 and in the following mainly additional features of the LED driver of Figure 2 are described.

As shown in Figure 2, the LED driver 1 comprises a further transformer T2. The further transformer T2 comprises a first primary winding PW2a and a second primary winding PW2b arranged on the secondary side SS of the LED driver 1 and a secondary winding SW2 arranged on the primary side PS of the LED driver 1. The further transformer T2 allows providing feedback information on the first current I1 and the second current I2 to the primary side PS that may be used by the control unit (not shown in Figure 2) for controlling the two switches S1 and S2 of the half bridge 2 in order to control the first current I1 and second current I2. In particular, the further transformer T2 allows providing a third current indicative of the first current and second current to the primary side PS of the LED driver 1. The control unit is configured to control, based on the third current, the switching of the two switches S1 and S2. In particular, the control unit may be configured to control, based on the third current, the frequency of the switching of the two switches S1 and S2 and/or a duty cycle of the switching of one of the two switches S1 and S2.

As shown in Figure 2, the first primary winding PW2a of the further transformer T2 may be electrically connected between the first terminal of the series connection SW1 of windings of the transformer T1 and the anode of the first diode D1. The second primary winding PW2b of the further transformer T2 may be electrically connected between the second terminal of the series connection SW1 of windings of the transformer T1 and the anode of the second diode D2

The LED driver 1 may comprise a third capacitor C3 arranged on the primary side PS of the LED driver 1 and electrically connected via a rectifier circuit to a first terminal of the secondary winding SW2 of the further transformer T2. The LED driver 1 may further comprise a fourth capacitor C4 arranged on the primary side PS of the LED driver 1 and electrically connected via the rectifier circuit to a second terminal of the secondary winding SW2 of the further transformer T2. The rectifier circuit may correspond to a full-bridge rectifier comprising four diodes, namely a third diode D3, a fourth diode D4, a fifth diode D5 and a sixth diode D6. In particular, the first terminal of the secondary winding SW2 is connected to the anode of the third diode D3, wherein the cathode of the third diode D3 is connected to one side of the third capacitor C3. The other side of the third capacitor C3 is connected to the anode of the fifth diode D5, wherein the cathode of the fifth diode D5 is connected to the first terminal of the secondary winding SW2. The second terminal of the secondary winding SW2 is connected to the anode of the fourth diode D4, wherein the cathode of the fourth diode D4 is connected to one side of the fourth capacitor C4. The other side of the fourth capacitor C4 is connected to the anode of the sixth diode D6, wherein the cathode of the sixth diode D6 is connected to the second terminal of the secondary winding SW2.

As shown in Figure 2, optionally a first resistor R1 may be connected in parallel to the secondary winding SW2 for preventing or reducing parasitic effects at the secondary winding SW2 of the further transformer T2. A second resistor R2 may optionally be connected in parallel to the third capacitor C3 for forming a low pass filter. A third resistor R3 may optionally be connected in parallel to the fourth capacitor C4 for forming a low pass filter.

As outlined above, in the first switching state the secondary side alternating current flows through the first diode D1 of the first output channel CH1 and there is no current flow through the second diode D2 of the second output channel CH2, because the first diode D1 is forward biased and the second diode D2 is reverse biased. Therefore, there is a current flow via the first primary winding PW2a of the further transformer T2, but no current flow via the second primary winding PW2b of the further transformer T2 in the first switching state. The current flow through the first primary winding PW2a of the further transformer T2 causes a third current at the secondary winding SW2 of the further transformer T2 that flows via the third diode D3 to the third capacitor C3 generating the first voltage V1 at the third capacitor C3 (the third current charges the third capacitor C3). Since in the first switching state the third current is caused by the current flow via the first primary winding PW2a of the first output channel CH1, the third current is indicative of the first current I1 of the first output channel CH1 and, thus, the first voltage V1 is also indicative of the first current I1. Thus, the first voltage V1 at the third capacitor C3 is a measure that provides information on the first current I1.

In the second switching state the secondary side alternating current flows through the second diode D2 of the second output channel CH2 and there is no current flow through the first diode D1 of the first output channel CH1, because the first diode D1 is reverse biased and the second diode D2 is forward biased. Therefore, there is a current flow via the second primary winding PW2b of the further transformer T2, but not current flow via the first primary winding PW2a of the further transformer T2 in the second switching state. The current flow through the second primary winding PW2b of the further transformer T2 causes a third current at the secondary winding SW2 of the further transformer T2 that flows via the fourth diode D4 to the fourth capacitor C4 generating the second voltage V2 at the capacitor C4 (the third current charges the fourth capacitor C4). Since in the second switching state the third current is caused by the current flow via the second primary winding PW2b of the second output channel CH2, the third current is indicative of the second current I2 of the second output channel CH2 and, thus, the second voltage V2 is also indicative of the second current I2. Thus, the second voltage V2 at the fourth capacitor C4 is a measure that provides information on the second current I2.

The control unit may receive the first voltage V1 and the second voltage V2 and be configured to control, based on the first voltage V1 and the second voltage V2, the switching of the two switches S1 and S2. In particular, the control unit may be configured to control, based on the first voltage V1 and the second voltage V2, the frequency of the switching of the two switches S1 and S2 and/or a duty cycle of the switching of one of the two switches S1 and S2.

**Figure** 3 is a graph showing the value of the first current and second current provided by the two output channels of a LED driver according to an embodiment of figure 1 or 2.

Figure 3 exemplarily shows the values of the first current I1 and second current I2 of the two output channels CH1, CH2 of the LED driver of Figure 1 or 2 for different duty cycles. Therefore, in the following reference is made to the LED driver of Figures 1 and 2. The y-axis of the graph exemplarily shows the duty cycle of the switching of the second switch S2 (low side switch) of the two switches S1 and S2 of the series connection 2 of switches between the values 0.2 (20%) and 0.8 (80%) for the duty cycle. The range between 0.2 and 0.8 may be optionally chosen for controlling a duty cycle of the switching of a switch in case the LED driver comprises a resonant circuit, because this allows a destroying free operation of the series connection 2 of switches. Namely, in case the on-time of the first switch S1 is much greater than the on-time of the second switch (i.e. a duty cycle of the switching of the first switch S1 is above 0.8 or a duty cycle of the switching of the second switch S2 is below 0.2), the operation may lead to a destruction of the resonant circuit 3 and, thus, the switches S1 and S2 of the series connection 2 of switches. The x-axis shows current values in mA.

As shown in Figure 3, at a duty cycle threshold A for the duty cycle of the switching of the second switch S2, the first current I1 of the first output channel CH1 and the second current I2 of the second output channel CH2 equal to each other. According to Figure 3, the duty cycle threshold exemplarily corresponds to a duty cycle of about 0.4. This is due to a dead time between the conducting state of one switch of the switches S1, S2 and the conducting state of the other switch of the switches S1, S2. During the dead time, both switches S1, S2 are in the non-conducting state. The dead time between the conducting states prevents cross conduction of the switches S1, S2 (i.e. it prevents that the two switches are at the same time in the conducting state). When the dead time is also considered in the duty cycle, this will lead to a shift (e.g. the duty cycle threshold is shifted from a duty cycle of 0.5 to a duty cycle of 0.4 as indicated in Figure 3). For example in Figure 3, the currents I1 and I2 are equal at a duty cycle of 0.4. The dead time between the conducting states of the switches is in this case 10% of the period. Resulting in equal on-times of the high side switch S1 and low side switch S2 at a duty cycle of 0.4. The duty cycle threshold A of about 0.4 shown in Figure 3 is only an example for describing the function of the LED driver and, thus, is not limiting for the present invention. That is, the switches S1 and S2 of the half bridge of the LED driver may be switched with different values for the dead time.

As can be seen from Figure 3, by increasing the duty cycle (of the switching of the second switch S2 of the series connection 2 of switches) above the duty cycle threshold A, the ratio between the first current I1 and the second current I2 may be adjusted such that the second current I2 is greater than the first current I1. The greater the duty cycle above the duty cycle threshold A, the greater the second current I2 and the smaller the first current I1. Accordingly, by decreasing the duty cycle below the duty cycle threshold A, the ratio between the first current I1 and the second current I2 may be adjusted such that that the first current I1 is greater than the second current I2. The smaller the duty cycle below the duty cycle threshold A, the greater the first current I1 and the smaller the second current I2.

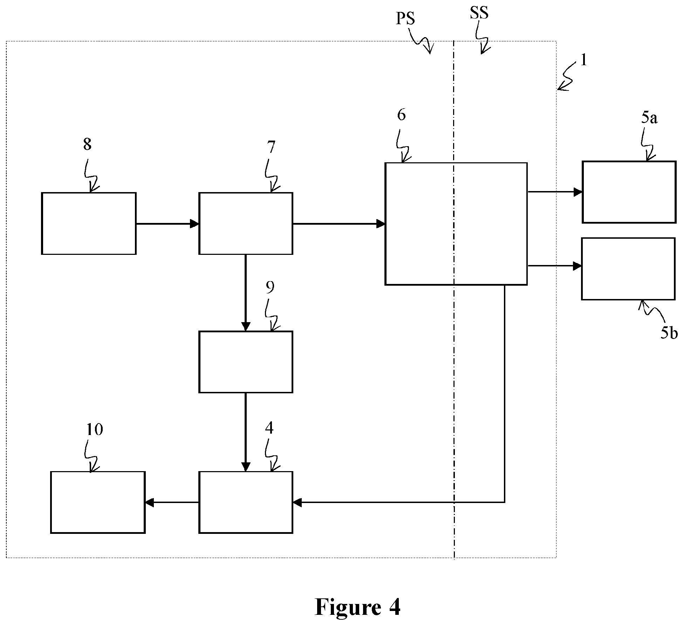

**Figure 4** is a schematic block diagram of a LED driver according to an embodiment of the present invention.

The block 6 corresponds to the power converter circuit shown in Figures 1 and 2 comprising the half bridge 2, the resonant circuit 3, the transformer T1 and the two output channels CH1 and CH2 that are electrically connected to the secondary winding arrangement SW1 of the transformer T1. For a detailed description of these components, reference is made to the above description of Figures 1 and 2. As indicated in Figure 4, two LED arrangements 5a, 5b may be electrically connected to the two output channels CH1 and CH2 of the LED driver 1. The galvanic isolation, provided by the transformer T1, between the primary side PS and the secondary side SS of the LED driver 1 is also indicated in Figure 4 (cf. dashed line).

As shown in Figure 4, the LED driver 1 may comprise a rectifier and/or filter circuit 8 and a PFC circuit 7 for supplying the half bridge 2 of the power converter circuit 6 of the LED driver 1 with a voltage. The rectifier and/or filter circuit 8 and the PFC circuit 7 may correspond to the voltage supply VS shown in Figures 1 and 2. The filter and/or rectifier circuit 8 may comprise an electromagnetic interference filter circuit (EMI filter circuit). The PFC circuit 7 may be an actively switched PFC circuit 7, in particular in form of a boost converter. The control unit 4 may control the two switches S1 and S2 of the half bridge 2 of the power converter circuit 6 and the PFC circuit 7, in case the PFC circuit 7 is an actively switched PFC circuit. The LED driver 1 may be electrically connected to an external voltage source, e.g. mains or a battery, such that a supply voltage provided by the external voltage source is filtered and/or rectified by the filter and/or rectifier circuit 8 and then provided to the PFC circuit 7. The PFC circuit 7 is then configured to provide based on the filtered and/or rectified supply voltage a voltage to the half bridge 2 of the power converter circuit 6.

As indicated in Figure 4 by the arrow from the power converter circuit 6 to the control unit 4, the LED driver 1 may comprise a further transformer T2 for providing feedback information on the first current I1 of the first output channel CH1 and the second current I2 of the second out channel CH2 from the secondary side SS to the primary side PS of the LED driver 1. For further information thereon, reference is made to the description of Figure 2. The control unit 4 may use this feedback information for controlling the switching of the two switches S1 and S2 of the half bridge 2 of the power converter circuit 6.

The LED driver 1 may further comprise an optional low voltage power supply 9 for electrically supplying the control unit 4. The LED driver 1 may comprise an optional interface 10 for communicating with extern, e.g. external electronic components. For example, the interface 10 may be a DALI ("Digital Addressable Lighting Interface") interface or a DALI-2 interface. That is, the interface 10 may be configured according to the DALI (DALI Edition 1) industry standard or the DALI-2 (DALI Edition 2) industry standard, which are well known industry standards in the field of lighting. In particular, the interface 10 may be configured for a wireless and/or a wire-bound communication. The interface 10 may be configured to be connected to a wired bus, e.g. a DALI bus or DALI-2 bus.

## Claims

1. An LED driver (1) with two output channels (CH1, CH2), wherein the LED driver (1) comprises:
- a transformer (T1) for a galvanic isolation of a primary side (PS) and a secondary side (SS) of the LED driver (1), wherein the transformer (T1) comprises a primary winding (PW1) arranged on the primary side (PS) and a secondary winding arrangement (SW1) arranged on the secondary side (SS),
- a half bridge (2) comprising two switches (S1, S2) arranged on the primary side (PS) of the LED driver (1) for providing, via a resonant circuit (3), a primary side alternating current to the primary winding (PW1) of the transformer (T1), the primary side alternating current causes a secondary side alternating current of the secondary winding arrangement (SW1),
- the resonant circuit (3) arranged on the primary side (PS) of the LED driver (1) and electrically connected between the primary winding (PW1) of the transformer (T1) and a node (N1) between the two switches (S1, S2) of the half bridge (2), and
- a control unit (4) arranged on the primary side (PS) of the LED driver (1) for controlling the primary side alternating current by controlling a switching of the two switches (S1, S2) of the half bridge (2); wherein
- the two output channels (CH1, CH2) each comprise a rectifier circuit (RF1; RF2) and are arranged on the secondary side (SS) of the LED driver (1) and electrically connected to the secondary winding arrangement (SW1) of the transformer (T1) such that, dependent on the primary side alternating current,
- the rectifier circuit (RF1) of a first output channel (CH1) of the two output channels (CH1, CH2) is configured to provide a first current (I1) based on the secondary side alternating current of the secondary winding arrangement (SW1), and
- the rectifier circuit (RF2) of a second output channel (CH2) of the two output channels (CH1, CH2) is configured to provide a second current (I2) based on the secondary side alternating current of the secondary winding arrangement (SW1); and
- the control unit (4) is configured to adjust the ratio between the first current (I1) and the second current (I2) by controlling a duty cycle of the switching of one of the two switches (S1, S2) of the half bridge (2);
wherein the two output channels (CH1, CH2) are arranged on the secondary side (SS) of the LED driver (1) and electrically connected to the secondary winding arrangement (SW1) of the transformer (T1) such that
- the rectifier circuit (RF1) of the first output channel (CH1) is configured to provide the first current (I1), when a positive half-wave of the primary side alternating current is provided to the primary winding (PW1) of the transformer (T1), and
- the rectifier circuit (RF2) of the second output channel (CH2) is configured to provide the second current (I2), when a negative half-wave of the primary side alternating current is provided to the primary winding (PW1) of the transformer (T1);
**characterized in that**
- the LED driver (1) comprises a further transformer (T2) for providing a third current indicative of the first current (I1) and second current (I2) to the primary side (PS) of the LED driver (1), the further transformer (T2) comprises a first and second primary winding (PW2a, PW2b) arranged on the secondary side (SS) of the LED driver (1) and a secondary winding (SW2) arranged on the primary side (PS) of the LED driver (1);
wherein
- the first and second primary winding (PW2a, PW2b) of the further transformer (T2) are electrically connected to the secondary winding arrangement (SW1) of the transformer (T1), and
- the control unit (4) is configured to control, based on the third current, the switching of the two switches (S1, S2) of the half bridge (2).

2. The LED driver (1) according to claim 1, wherein the rectifier circuit (RF1) of the first output channel (CH1) comprises a first diode (D1) and a first capacitor (C1) and the rectifier circuit (RF2) of the second output channel (CH2) comprises a second diode (D2) and a second capacitor (C2); wherein
- the secondary winding arrangement (SW1) comprises a first terminal and a second terminal,
- the anode of the first diode (D1) is electrically connected to the first terminal of the secondary winding arrangement (SW1) of the transformer (T1) and the cathode of the first diode (D1) is electrically connected to the first capacitor (C1), and
- the anode of the second diode (D2) is electrically connected to the second terminal of the secondary winding arrangement (SW1) of the transformer (T1) and the cathode of the second diode (D2) is electrically connected to the second capacitor (C2).

3. The LED driver (1) according to any one of the previous claims, wherein
- the secondary winding arrangement (SW1) of the transformer (1) is a secondary winding with a first terminal, a center tap and a second terminal, and
- the two output channels (CH1, CH2) are electrically connected to the secondary winding such that the first output channel (CH1) is electrically connected to the first terminal and the center tap of the secondary winding and the second output channel (CH2) is electrically connected to the second terminal of the secondary winding.

4. The LED driver (1) according to claim 3, when depending on claim 2, wherein
- the anode of the first diode (D1) is electrically connected to the first terminal of the secondary winding,
- the first capacitor (C1) is electrically connected between the cathode of the first diode (D1) and the center tap, the center tap is connected to secondary side ground (SEC GND),
- the anode of the second diode (D2) is electrically connected to the second terminal of the secondary winding, and
- the second capacitor (C2) is electrically connected between the cathode of the second diode and the secondary side ground (SEC GND).

5. The LED driver (1) according to claim 1 or 2, wherein
- the secondary winding arrangement (SW1) of the transformer is a series connection of windings comprising two secondary windings (SW1a, Sw1b), the series connection of windings comprising a first terminal, a node (N2) between the two secondary windings (SW1a, SW1b) and a second terminal, and
- the two output channels (CH1, CH2) are electrically connected to the series connection of windings such that the first output channel (CH1) is electrically connected to the first terminal and the node (N2) between the two secondary windings (SW1a, SW1b) and the second output channel (CH2) is electrically connected to the second terminal.

6. The LED driver (1) according to claim 5, when depending on claim 2, wherein
- the anode of the first diode (D1) is electrically connected to the first terminal of the series connection of windings,
- the first capacitor (C1) is electrically connected between the cathode of the first diode (D1) and the node (N2) between the two secondary windings (SW1a, SW1b), the node (N2) is connected to secondary side ground (SEC GND),
- the anode of the second diode (D2) is electrically connected to the second terminal of the series connection of windings, and
- the second capacitor (C2) is electrically connected between the cathode of the second diode (D2) and the secondary side ground (SEC GND).

7. The LED driver (1) according to any one of the previous claims, wherein
- the control unit (4) is configured to increase the duty cycle above a duty cycle threshold to adjust the ratio between the first current (I1) and the second current (I2) such that one of the first current (I1) and the second current (I2) is greater than the other current of the first current (I1) and the second current (I2), wherein
the greater the duty cycle above the duty cycle threshold the greater the one current and the smaller the other current; and
- the control unit (4) is configured to decrease the duty cycle below the duty cycle threshold to adjust the ratio between the first current (I1) and the second current (I2) such that the other current is greater than the one current, wherein
the smaller the duty cycle below the duty cycle threshold the greater the other current and the smaller the one current.

8. The LED driver (1) according to any one of the previous claims, wherein
in case the duty cycle is the duty cycle of the switching of a first switch (S1) of the two switches (S1, S2) of the half bridge (2), the first switch (S1) is configured to provide in its conducting-state the positive half-wave of the primary side alternating current to the primary winding (PW1) of the transformer (T1):
- the control unit (4) is configured to increase the duty cycle above a duty cycle threshold to adjust the ratio between the first current (I1) and the second current (I2) such that the first current (I1) is greater than the second current (I2), wherein
the greater the duty cycle above the duty cycle threshold the greater the first current (I1) and the smaller the second current (I2); and
- the control unit (4) is configured to decrease the duty cycle below the duty cycle threshold to adjust the ratio between the first current (I1) and the second current (I2) such that the second current (I2) is greater than the first current (I1), wherein
the smaller the duty cycle below the duty cycle threshold the greater the second current (I2) and the smaller the first current (I1).

9. The LED driver (1) according to any one of the previous claims, wherein the control unit (4) is configured to adjust an overall current formed by the first current (I1) and the second current (I2) by controlling the frequency of the switching of the two switches (S1, S2) of the half bridge (2).

10. The LED driver (1) according to any one of claims 3 to 6 or any one of claims 7 to 9, when depending on claim 3 or 5, wherein
- in case the secondary winding arrangement (SW1) of the transformer (T1) is the secondary winding:
- the first primary winding (PW2a) of the further transformer (T2) is electrically connected to the first terminal of the secondary winding, and
- the second primary winding (PW2b) of the further transformer (T2) is electrically connected to the second terminal of the secondary winding; or
- in case the secondary winding arrangement (SW1) of the transformer is the series connection of windings:
- the first primary winding (PW2a) of the further transformer (T2) is electrically connected to the first terminal of the series connection of windings, and
- the second primary winding (PW2b) of the further transformer (T2) is electrically connected to the second terminal of the series connection of windings.

11. The LED driver (1) according to claim 4 or 6 or any one of claims 7 to 10, when depending on claim 4 or 6, wherein
- in case the secondary winding arrangement (SW1) of the transformer (T1) is the secondary winding:
- the first primary winding (PW2a) of the further transformer (T2) is electrically connected between the first terminal of the secondary winding and the anode of the first diode (D1), and
- the second primary winding (PW2b) of the further transformer (T2) is electrically connected between the second terminal of the secondary winding and the anode of the second diode (D2); or
- in case the secondary winding arrangement (SW1) of the transformer (T1) is the series connection of windings:
- the first primary winding (PW2a) of the further transformer (T2) is electrically connected between the first terminal of the series connection of windings and the anode of the first diode (D1), and
- the second primary winding (PW2b) of the further transformer (T2) is electrically connected between the second terminal of the series connection of windings and the anode of the second diode (D2).

12. The LED driver (1) according to any one of the previous claims, wherein the secondary winding (SW2) of the further transformer (T2) comprises a first and second terminal, and the LED driver (1) comprises:
- a third capacitor (C3) arranged on the primary side (PS) of the LED driver (1) and electrically connected via a rectifier circuit (D3, D4, D5, D6) to the first terminal of the secondary winding (SW2) of the further transformer (T2) for providing to the control unit (4) a first voltage indicative of the first direct current (I1) when the third current flows through the third capacitor (C3), and
- a fourth capacitor (C4) arranged on the primary side (PS) of the LED driver (1) and electrically connected via the rectifier circuit (D3, D4, D5, D6) to the second terminal of the secondary winding (SW2) of the further transformer (T2) for providing to the control unit (4) a second voltage indicative of the second direct current (I2) when the third current flows through the fourth capacitor (C4).

13. A luminaire comprising
- an LED driver (1) according to any one of the previous claims, and
- two LED arrangements (5a, 5b); wherein
- a first LED arrangement (5a) of the two LED arrangements (5a, 5b) is electrically connected to the first output channel (CH1) of the LED driver (1) and a second LED arrangement (5b) of the two LED arrangements (5a, 5b) is electrically connected to the second output channel (CH2) of the LED driver (1).

14. A method for operating a LED driver (1) with two output channels (CH1, CH2),
- wherein the LED driver (1) comprises:
- a transformer (T1) for a galvanic isolation of a primary side (PS) and a secondary side (SS) of the LED driver (1), wherein the transformer (T1) comprises a primary winding (PW1) arranged on the primary side (PS) and a secondary winding arrangement (SW1) arranged on the secondary side (SS),
- a half bridge (2) comprising two switches (S1, S2) arranged on the primary side (PS) of the LED driver (1) for providing , via a resonant circuit (3), a primary side alternating current to the primary winding (PW1) of the transformer (T1), the primary side alternating current causes a secondary side alternating current of the secondary winding arrangement (SW1), and
- the resonant circuit (3) arranged on the primary side (PS) of the LED driver (1) and electrically connected between the primary winding (PW1) of the transformer (T1) and a node (N1) between the two switches (S1, S2) of the half bridge (2), wherein
- the two output channels (CH1, CH2) each comprise a rectifier circuit (RF1; RF2) and are arranged on the secondary side (SS) of the LED driver (1) and electrically connected to the secondary winding arrangement (SW1) of the transformer (T1) such that, dependent on the primary side alternating current,
- the rectifier circuit (RF1) of a first output channel (CH1) of the two output channels (CH1, CH2) is configured to provide a first current (I1) based on the secondary side alternating current of the secondary winding arrangement (SW1), and
- the rectifier circuit (RF2) of a second output channel (CH2) of the two output channels (CH1, CH2) is configured to provide a second current (I2) based on the secondary side alternating current of the secondary winding arrangement (SW1);
wherein the two output channels (CH1, CH2) are arranged on the secondary side (SS) of the LED driver (1) and electrically connected to the secondary winding arrangement (SW1) of the transformer (T1) such that
- the rectifier circuit (RF1) of the first output channel (CH1) is configured to provide the first current (I1), when a positive half-wave of the primary side alternating current is provided to the primary winding (PW1) of the transformer (T1), and
- the rectifier circuit (RF2) of the second output channel (CH2) is configured to provide the second current (I2), when a negative half-wave of the primary side alternating current is provided to the primary winding (PW1) of the transformer (T1); wherein
- the LED driver (1) comprises a further transformer (T2) for providing a third current indicative of the first current (I1) and second current (I2) to the primary side (PS) of the LED driver (1), the further transformer (T2) comprises a first and second primary winding (PW2a, PW2b) arranged on the secondary side (SS) of the LED driver (1) and a secondary winding (SW2) arranged on the primary side (PS) of the LED driver (1); wherein
- the first and second primary winding (PW2a, PW2b) of the further transformer (T2) are electrically connected to the secondary winding arrangement (SW1) of the transformer (T1),
- wherein the method comprises:
adjusting the ratio between the first current (I1) and the second current (I2) by controlling a duty cycle of the switching of one of the two switches (S1, S2) of the half bridge (2), and
controlling, based on the third current, the switching of the two switches (S1, S2) of the half bridge (2).

## Patentansprüche

1. LED-Treiber (1) mit zwei Ausgangskanälen (CH1, CH2), wobei der LED-Treiber (1) Folgendes umfasst:
• einen Transformator (T1) zur galvanischen Trennung einer Primärseite (PS) und einer Sekundärseite (SS) des LED-Treibers (1), wobei der Transformator (T1) eine Primärwicklung (PW1) auf der Primärseite (PS) und eine Sekundärwicklungsanordnung (SW1) auf der Sekundärseite (SS) aufweist,
• eine Halbbrücke (2) mit zwei Schaltern (S1, S2), die auf der Primärseite (PS) des LED-Treibers (1) angeordnet sind, um über eine Resonanzschaltung (3) einen primärseitigen Wechselstrom der Primärwicklung (PW1) des Transformators (T1) zuzuführen, wobei der primärseitige Wechselstrom einen sekundärseitigen Wechselstrom in der Sekundärwicklungsanordnung (SW1) erzeugt,
• die Resonanzschaltung (3), die auf der Primärseite (PS) des LED-Treibers (1) angeordnet und elektrisch zwischen der Primärwicklung (PW1) des Transformators (T1) und einem Knoten (N1) zwischen den beiden Schaltern (S1, S2) der Halbbrücke (2) verbunden ist, und
• eine Steuereinheit (4), die auf der Primärseite (PS) des LED-Treibers (1) angeordnet ist, um den primärseitigen Wechselstrom durch Ansteuern der beiden Schalter (S1, S2) der Halbbrücke (2) zu regeln;
wobei
• die beiden Ausgangskanäle (CH1, CH2) jeweils eine Gleichrichterschaltung (RF1, RF2) umfassen und auf der Sekundärseite (SS) des LED-Treibers (1) angeordnet und mit der Sekundärwicklungsanordnung (SW1) des Transformators (T1) derart elektrisch verbunden sind, dass - abhängig vom primärseitigen Wechselstrom - die Gleichrichterschaltung (RF1) eines ersten Ausgangskanals (CH1) dazu eingerichtet ist, einen ersten Strom (11) basierend auf dem sekundärseitigen Wechselstrom der Sekundärwicklungsanordnung (SW1) bereitzustellen, und die Gleichrichterschaltung (RF2) eines zweiten Ausgangskanals (CH2) dazu eingerichtet ist, einen zweiten Strom (12) basierend auf dem sekundärseitigen Wechselstrom der Sekundärwicklungsanordnung (SW1) bereitzustellen; und
• die Steuereinheit (4) eingerichtet ist, das Verhältnis zwischen dem ersten Strom (11) und dem zweiten Strom (12) durch Steuern des Tastverhältnisses der Ansteuerung eines der beiden Schalter (S1, S2) der Halbbrücke (2) einzustellen;
wobei die beiden Ausgangskanäle (CH1, CH2) auf der Sekundärseite (SS) des LED-Treibers (1) derart mit der Sekundärwicklungsanordnung (SW1) des Transformators (T1) verbunden sind, dass
• die Gleichrichterschaltung (RF1) des ersten Ausgangskanals (CH1) eingerichtet ist, den ersten Strom (11) bereitzustellen, wenn eine positive Halbwelle des primärseitigen Wechselstroms an die Primärwicklung (PW1) des Transformators (T1) angelegt wird, und
• die Gleichrichterschaltung (RF2) des zweiten Ausgangskanals (CH2) eingerichtet ist, den zweiten Strom (12) bereitzustellen, wenn eine negative Halbwelle des primärseitigen Wechselstroms an die Primärwicklung (PW1) des Transformators (T1) angelegt wird;
**dadurch gekennzeichnet, dass**
• der LED-Treiber (1) einen weiteren Transformator (T2) umfasst, der dazu dient, einen dritten Strom, der repräsentativ für den ersten Strom (11) und den zweiten Strom (12) ist, an der Primärseite (PS) des LED-Treibers (1) bereitzustellen, wobei der weitere Transformator (T2) eine erste und eine zweite Primärwicklung (PW2a, PW2b) auf der Sekundärseite (SS) des LED-Treibers (1) und eine Sekundärwicklung (SW2) auf der Primärseite (PS) des LED-Treibers (1) aufweist;
• die erste und die zweite Primärwicklung (PW2a, PW2b) des weiteren Transformators (T2) mit der Sekundärwicklungsanordnung (SW1) des Transformators (T1) elektrisch verbunden sind; und
• die Steuereinheit (4) basierend auf dem dritten Strom eingerichtet ist, die Ansteuerung der beiden Schalter (S1, S2) der Halbbrücke (2) zu regeln.

2. LED-Treiber (1) nach Anspruch 1, wobei die Gleichrichterschaltung (RF1) des ersten Ausgangskanals (CH1) eine erste Diode (D1) und einen ersten Kondensator (C1) umfasst und die Gleichrichterschaltung (RF2) des zweiten Ausgangskanals (CH2) eine zweite Diode (D2) und einen zweiten Kondensator (C2) umfasst; wobei
• die Sekundärwicklungsanordnung (SW1) eine erste Klemme und eine zweite Klemme aufweist,
• die Anode der ersten Diode (D1) elektrisch mit der ersten Klemme der Sekundärwicklungsanordnung (SW1) des Transformators (T1) verbunden ist und die Kathode der erste Diode (D1) elektrisch mit dem ersten Kondensator (C1) verbunden ist, und
• die Anode der zweiten Diode (D2) elektrisch mit der zweiten Klemme der Sekundärwicklungsanordnung (SW1) des Transformators (T1) verbunden ist und die Kathode der zweiten Diode (D2) elektrisch mit dem zweiten Kondensator (C2) verbunden ist.

3. LED-Treiber (1) nach einem der vorhergehenden Ansprüche, wobei
• die Sekundärwicklungsanordnung (SW1) des Transformators (T1) eine Sekundärwicklung mit einer ersten Klemme, einem Mittelabgriff und einer zweiten Klemme ist, und
• die beiden Ausgangskanäle (CH1, CH2) derart mit der Sekundärwicklung verbunden sind, dass der erste Ausgangskanal (CH1) an die erste Klemme und den Mittelabgriff der Sekundärwicklung und der zweite Ausgangskanal (CH2) an die zweite Klemme der Sekundärwicklung angeschlossen ist.

4. LED-Treiber (1) nach Anspruch 3, sofern Anspruch 3 von Anspruch 2 abhängt, wobei
• die Anode der ersten Diode (D1) mit der ersten Klemme der Sekundärwicklung verbunden ist,
• der erste Kondensator (C1) zwischen der Kathode der ersten Diode (D1) und dem Mittelabgriff angeschlossen ist, wobei der Mittelabgriff mit dem sekundärseitigen Massepotential (SEC GND) verbunden ist,
• die Anode der zweiten Diode (D2) mit der zweiten Klemme der Sekundärwicklung verbunden ist, und
• der zweite Kondensator (C2) zwischen der Kathode der zweiten Diode (D2) und dem sekundärseitigen Massepotential (SEC GND) angeschlossen ist.

5. LED-Treiber (1) nach Anspruch 1 oder 2, wobei
• die Sekundärwicklungsanordnung (SW1) des Transformators (T1) eine in Reihe geschaltete Wicklungsanordnung mit zwei Sekundärwicklungen (SW1a, SW1b) ist, welche eine erste Klemme, einen Knoten (N2) zwischen den beiden Sekundärwicklungen (SW1a, SW1b) und eine zweite Klemme aufweist, und
• die beiden Ausgangskanäle (CH1, CH2) derart mit der in Reihe geschalteten Wicklungsanordnung verbunden sind, dass der erste Ausgangskanal (CH1) an die erste Klemme und den Knoten (N2) zwischen den beiden Sekundärwicklungen (SW1a, SW1b) und der zweite Ausgangskanal (CH2) an die zweite Klemme der in Reihe geschalteten Wicklungsanordnung angeschlossen ist.

6. LED-Treiber (1) nach Anspruch 5, sofern Anspruch 5 von Anspruch 2 abhängt, wobei
• die Anode der ersten Diode (D1) mit der erste Klemme der in Reihe geschalteten Wicklungsanordnung verbunden ist,
• der erste Kondensator (C1) zwischen der Kathode der ersten Diode (D1) und dem Knoten (N2) zwischen den beiden Sekundärwicklungen (SW1a, SW1b) angeschlossen ist, wobei der Knoten (N2) mit dem sekundärseitigen Massepotential (SEC GND) verbunden ist,
• die Anode der zweiten Diode (D2) mit der zweiten Klemme der in Reihe geschalteten Wicklungsanordnung verbunden ist, und
• der zweite Kondensator (C2) zwischen der Kathode der zweiten Diode (D2) und dem sekundärseitigen Massepotential (SEC GND) angeschlossen ist.

7. LED-Treiber (1) nach einem der vorhergehenden Ansprüche, wobei
• die Steuereinheit (4) eingerichtet ist, das Tastverhältnis über einen Schwellenwert hinaus zu erhöhen, um das Verhältnis zwischen dem ersten Strom (11) und dem zweiten Strom (12) so einzustellen, dass einer der beiden Ströme größer ist als der andere, wobei gilt: Je größer das Tastverhältnis über dem Schwellenwert ist, desto größer ist der eine Strom und desto kleiner ist der andere Strom; und
• die Steuereinheit (4) eingerichtet ist, das Tastverhältnis unter den Schwellenwert zu verringern, um das Verhältnis zwischen dem ersten Strom (11) und dem zweiten Strom (12) so einzustellen, dass der andere Strom größer ist als der eine Strom, wobei gilt: Je kleiner das Tastverhältnis unter dem Schwellenwert ist, desto größer ist der andere Strom und desto kleiner ist der eine Strom.

8. LED-Treiber (1) nach einem der vorhergehenden Ansprüche, wobei - für den Fall, dass es sich bei dem Tastverhältnis um das Tastverhältnis der Ansteuerung eines ersten Schalters (S1) der beiden Schalter (S1, S2) der Halbbrücke (2) handelt und der erste Schalter (S1) in seinem leitenden Zustand die positive Halbwelle des primärseitigen Wechselstroms an die Primärwicklung (PW1) des Transformators (T1) liefert - gilt:
• die Steuereinheit (4) ist eingerichtet, das Tastverhältnis über einen Schwellenwert hinaus zu erhöhen, um das Verhältnis zwischen dem ersten Strom (11) und dem zweiten Strom (12) so einzustellen, dass der erste Strom (11) größer ist als der zweite Strom (12), wobei gilt: Je größer das Tastverhältnis über dem Schwellenwert ist, desto größer ist der erste Strom (11) und desto kleiner ist der zweite Strom (12); und
• die Steuereinheit (4) ist eingerichtet, das Tastverhältnis unter den Schwellenwert zu verringern, um das Verhältnis zwischen dem ersten Strom (11) und dem zweiten Strom (12) so einzustellen, dass der zweite Strom (12) größer ist als der erste Strom (I1), wobei gilt: Je kleiner das Tastverhältnis unter dem Schwellenwert ist, desto größer ist der zweite Strom (12) und desto kleiner ist der erste Strom (11).

9. LED-Treiber (1) nach einem der vorhergehenden Ansprüche, wobei die Steuereinheit (4) eingerichtet ist, einen Gesamtstrom, der durch den ersten Strom (11) und den zweiten Strom (12) gebildet wird, durch Steuern der Frequenz der Ansteuerung der beiden Schalter (S1, S2) der Halbbrücke (2) einzustellen.

10. LED-Treiber (1) nach einem der Ansprüche 3 bis 6 oder einem der Ansprüche 7 bis 9, sofern abhängig von Anspruch 3 oder 5, wobei
• falls die Sekundärwicklungsanordnung (SW1) des Transformators (T1) die Sekundärwicklung ist: die zweite Primärwicklung (PW2b) des weiteren Transformators (T2) elektrisch mit der zweiten Klemme der Sekundärwicklung verbunden ist; oder
• falls die Sekundärwicklungsanordnung (SW1) des Transformators (T1) die in Reihe geschaltete Wicklungsanordnung ist:
• die erste Primärwicklung (PW2a) des weiteren Transformators (T2) elektrisch mit der ersten Klemme der in Reihe geschalteten Wicklungsanordnung verbunden ist, und
▪ die zweite Primärwicklung (PW2b) des weiteren Transformators (T2) elektrisch mit der zweiten Klemme der in Reihe geschalteten Wicklungsanordnung verbunden ist.

11. LED-Treiber (1) nach Anspruch 4 oder 6 oder einem der Ansprüche 7 bis 10, sofern abhängig von Anspruch 4 oder 6, wobei
• falls die Sekundärwicklungsanordnung (SW1) des Transformators (T1) die Sekundärwicklung ist:
▪ die erste Primärwicklung (PW2a) des weiteren Transformators (T2) zwischen der ersten Klemme der Sekundärwicklung und der Anode der ersten Diode (D1) angeordnet ist und die zweite Primärwicklung (PW2b) des weiteren Transformators (T2) zwischen der zweiten Klemme der Sekundärwicklung und der Anode der zweiten Diode (D2) angeordnet ist; oder
• falls die Sekundärwicklungsanordnung (SW1) des Transformators (T1) die in Reihe geschaltete Wicklungsanordnung ist:
▪ die erste Primärwicklung (PW2a) des weiteren Transformators (T2) zwischen der ersten Klemme der in Reihe geschalteten Wicklungsanordnung und der Anode der ersten Diode (D1) angeordnet ist und die zweite Primärwicklung (PW2b) des weiteren Transformators (T2) zwischen der zweiten Klemme der in Reihe geschalteten Wicklungsanordnung und der Anode der zweiten Diode (D2) angeordnet ist.

12. LED-Treiber (1) nach einem der vorhergehenden Ansprüche, wobei die Sekundärwicklung (SW2) des weiteren Transformators (T2) eine erste und eine zweite Klemme aufweist, und der LED-Treiber (1) Folgendes umfasst:
• einen dritten Kondensator (C3), der auf der Primärseite (PS) des LED-Treibers (1) angeordnet und über eine Gleichrichterschaltung (D3, D4, D5, D6) mit der ersten Klemme der Sekundärwicklung (SW2) des weiteren Transformators (T2) verbunden ist, um der Steuereinheit (4) eine erste Spannung bereitzustellen, die ein Maß für den ersten Strom (11) ist, wenn der dritte Strom durch den dritten Kondensator (C3) fließt; und
• einen vierten Kondensator (C4), der auf der Primärseite (PS) des LED-Treibers (1) angeordnet und über die Gleichrichterschaltung (D3, D4, D5, D6) mit der zweiten Klemme der Sekundärwicklung (SW2) des weiteren Transformators (T2) verbunden ist, um der Steuereinheit (4) eine zweite Spannung bereitzustellen, die ein Maß für den zweiten Strom (12) ist, wenn der dritte Strom durch den vierten Kondensator (C4) fließt.

13. Leuchte, umfassend
• einen LED-Treiber (1) nach einem der vorhergehenden Ansprüche, und
• zwei LED-Anordnungen (5a, 5b);
wobei
• eine erste LED-Anordnung (5a) der beiden LED-Anordnungen (5a, 5b) mit dem ersten Ausgangskanal (CH1) des LED-Treibers (1) elektrisch verbunden ist und eine zweite LED-Anordnung (5b) der beiden LED-Anordnungen (5a, 5b) mit dem zweiten Ausgangskanal (CH2) des LED-Treibers (1) elektrisch verbunden ist.

14. Verfahren zum Betreiben eines LED-Treibers (1) mit zwei Ausgangskanälen (CH1, CH2), wobei der LED-Treiber (1) Folgendes umfasst:
• einen Transformator (T1) zur galvanischen Trennung einer Primärseite (PS) und einer Sekundärseite (SS) des LED-Treibers (1), wobei der Transformator (T1) eine Primärwicklung (PW1) auf der Primärseite (PS) und eine Sekundärwicklungsanordnung (SW1) auf der Sekundärseite (SS) aufweist,
• eine Halbbrücke (2) mit zwei Schaltern (S1, S2) auf der Primärseite (PS) des LED-Treibers (1) zum Bereitstellen eines primärseitigen Wechselstroms - über eine Resonanzschaltung (3) - an die Primärwicklung (PW1) des Transformators (T1), wobei der primärseitige Wechselstrom einen sekundärseitigen Wechselstrom in der Sekundärwicklungsanordnung (SW1) erzeugt, und
• die Resonanzschaltung (3), die auf der Primärseite (PS) des LED-Treibers (1) angeordnet und elektrisch zwischen der Primärwicklung (PW1) des Transformators (T1) und einem Knoten (N1) zwischen den beiden Schaltern (S1, S2) der Halbbrücke (2) verbunden ist,
wobei
• die beiden Ausgangskanäle (CH1, CH2) jeweils eine Gleichrichterschaltung (RF1, RF2) umfassen und auf der Sekundärseite (SS) des LED-Treibers (1) derart mit der Sekundärwicklungsanordnung (SW1) des Transformators (T1) elektrisch verbunden sind, dass - abhängig vom primärseitigen Wechselstrom - die Gleichrichterschaltung (RF1) eines ersten Ausgangskanals (CH1) einen ersten Strom (11) basierend auf dem sekundärseitigen Wechselstrom der Sekundärwicklungsanordnung (SW1) bereitstellt und die Gleichrichterschaltung (RF2) eines zweiten Ausgangskanals (CH2) einen zweiten Strom (12) basierend auf dem sekundärseitigen Wechselstrom der Sekundärwicklungsanordnung (SW1) bereitstellt;
wobei die beiden Ausgangskanäle (CH1, CH2) auf der Sekundärseite (SS) derart mit der Sekundärwicklungsanordnung (SW1) des Transformators (T1) verbunden sind, dass
• die Gleichrichterschaltung (RF2) des zweiten Ausgangskanals (CH2) den zweiten Strom (12) bereitstellt, wenn eine negative Halbwelle des primärseitigen Wechselstroms an die Primärwicklung (PW1) des Transformators (T1) angelegt wird;
wobei
• der LED-Treiber (1) einen weiteren Transformator (T2) umfasst, der einen dritten Strom, der den ersten Strom (11) und den zweiten Strom (12) repräsentiert, an die Primärseite (PS) des LED-Treibers (1) überträgt, wobei der weitere Transformator (T2) eine erste und eine zweite Primärwicklung (PW2a, PW2b) auf der Sekundärseite (SS) des LED-Treibers (1) und eine Sekundärwicklung (SW2) auf der Primärseite (PS) des LED-Treibers (1) aufweist;
• die erste und die zweite Primärwicklung (PW2a, PW2b) des weiteren Transformators (T2) mit der Sekundärwicklungsanordnung (SW1) des Transformators (T1) elektrisch verbunden sind;
**dadurch gekennzeichnet, dass** das Verfahren Folgendes umfasst:
• Einstellen des Verhältnisses zwischen dem ersten Strom (11) und dem zweiten Strom (12) durch Steuern des Tastverhältnisses bei der Ansteuerung eines der beiden Schalter (S1, S2) der Halbbrücke (2); und
• Steuern der Ansteuerung der beiden Schalter (S1, S2) der Halbbrücke (2) basierend auf dem dritten Strom.

## Revendications

1. Pilote de LED (1) à deux canaux de sortie (CH1, CH2), comprenant :
• un transformateur (T1) assurant une isolation galvanique entre un côté primaire (PS) et un côté secondaire (SS) du pilote de LED (1), le transformateur (T1) comportant un enroulement primaire (PW1) disposé sur le côté primaire (PS) et un ensemble d'enroulements secondaires (SW1) disposé sur le côté secondaire (SS),
• un demi-pont (2) comprenant deux commutateurs (S1, S2) disposés sur le côté primaire (PS) du pilote de LED (1) pour fournir, via un circuit résonant (3), un courant alternatif côté primaire à l'enroulement primaire (PW1) du transformateur (T1), le courant alternatif côté primaire provoquant un courant alternatif côté secondaire dans l'ensemble d'enroulements secondaires (SW1),
• le circuit résonant (3) disposé sur le côté primaire (PS) du pilote de LED (1) et connecté électriquement entre l'enroulement primaire (PW1) du transformateur (T1) et un nœud (N1) situé entre les deux commutateurs (S1, S2) du demi-pont (2), et
• une unité de commande (4) disposée sur le côté primaire (PS) du pilote de LED (1) pour réguler le courant alternatif côté primaire en commandant la commutation des deux commutateurs (S1, S2) du demi-pont (2);
dans lequel
• les deux canaux de sortie (CH1, CH2) comprennent chacun un circuit de redressement (RF1, RF2) et sont disposés sur le côté secondaire (SS) du pilote de LED (1) et connectés électriquement à l'ensemble d'enroulements secondaires (SW1) du transformateur (T1) de sorte qu'en fonction du courant alternatif côté primaire, le circuit de redressement (RF1) d'un premier canal de sortie (CH1) est configuré pour fournir un premier courant (11) basé sur le courant alternatif côté secondaire de l'ensemble d'enroulements secondaires (SW1), et le circuit de redressement (RF2) d'un second canal de sortie (CH2) est configuré pour fournir un second courant (12) basé sur le courant alternatif côté secondaire de l'ensemble d'enroulements secondaires (SW1); et
• l'unité de commande (4) est configurée pour ajuster le rapport entre le premier courant (11) et le second courant (12) en commandant le rapport cyclique de la commutation de l'un des deux commutateurs (S1, S2) du demi-pont (2);
dans lequel les deux canaux de sortie (CH1, CH2) sont disposés sur le côté secondaire (SS) du pilote de LED (1) et connectés à l'ensemble d'enroulements secondaires (SW1) du transformateur (T1) de sorte que
• le circuit de redressement (RF1) du premier canal de sortie (CH1) est configuré pour fournir le premier courant (11) lorsqu'une demi-onde positive du courant alternatif côté primaire est appliquée à l'enroulement primaire (PW1) du transformateur (T1), et
• le circuit de redressement (RF2) du second canal de sortie (CH2) est configuré pour fournir le second courant (12) lorsqu'une demi-onde négative du courant alternatif côté primaire est appliquée à l'enroulement primaire (PW1) du transformateur (T1);
**caractérisé en ce que**
• le pilote de LED (1) comprend un transformateur supplémentaire (T2) pour fournir, au côté primaire (PS) du pilote de LED (1), un troisième courant représentatif du premier courant (11) et du second courant (12), le transformateur supplémentaire (T2) comportant un premier enroulement primaire (PW2a) et un second enroulement primaire (PW2b) disposés sur le côté secondaire (SS) du pilote de LED (1) et un enroulement secondaire (SW2) disposé sur le côté primaire (PS) du pilote de LED (1);
• le premier et le second enroulement primaire (PW2a, PW2b) du transformateur supplémentaire (T2) sont connectés électriquement à l'ensemble d'enroulements secondaires (SW1) du transformateur (T1); et
• l'unité de commande (4) est configurée pour commander la commutation des deux commutateurs (S1, S2) du demi-pont (2) en fonction du troisième courant.

2. Pilote de LED (1) selon la revendication 1, dans lequel le circuit de redressement (RF1) du premier canal de sortie (CH1) comprend une première diode (D1) et un premier condensateur (C1), et le circuit de redressement (RF2) du second canal de sortie (CH2) comprend une seconde diode (D2) et un second condensateur (C2); dans lequel
• l'ensemble d'enroulements secondaires (SW1) comprend une première borne et une seconde borne,
• l'anode de la première diode (D1) est connectée électriquement à la première borne de l'ensemble d'enroulements secondaires (SW1) du transformateur (T1), et la cathode de la première diode (D1) est connectée électriquement au premier condensateur (C1),
• l'anode de la seconde diode (D2) est connectée électriquement à la seconde borne de l'ensemble d'enroulements secondaires (SW1) du transformateur (T1), et la cathode de la seconde diode (D2) est connectée électriquement au second condensateur (C2).

3. Pilote de LED (1) selon l'une quelconque des revendications précédentes, dans lequel
• l'ensemble d'enroulements secondaires (SW1) du transformateur (T1) est un enroulement secondaire doté d'une première borne, d'un point médian et d'une seconde borne, et
• les deux canaux de sortie (CH1, CH2) sont connectés à l'enroulement secondaire de telle sorte que le premier canal de sortie (CH1) est connecté à la première borne et au point médian de l'enroulement secondaire, et le second canal de sortie (CH2) est connecté à la seconde borne de l'enroulement secondaire.

4. Pilote de LED (1) selon la revendication 3, lorsque celle-ci dépend de la revendication 2, dans lequel
• l'anode de la première diode (D1) est connectée à la première borne de l'enroulement secondaire,
• le premier condensateur (C1) est connecté entre la cathode de la première diode (D1) et le point médian, le point médian étant relié à la masse côté secondaire (SEC GND),
• l'anode de la seconde diode (D2) est connectée à la seconde borne de l'enroulement secondaire, et
• le second condensateur (C2) est connecté entre la cathode de la seconde diode (D2) et la masse côté secondaire (SEC GND).

5. Pilote de LED (1) selon la revendication 1 ou 2, dans lequel
• l'ensemble d'enroulements secondaires (SW1) du transformateur (T1) est une connexion en série de deux enroulements secondaires (SW1a, SW1b), ladite connexion en série comportant une première borne, un nœud (N2) entre les deux enroulements secondaires (SW1a, SW1b) et une seconde borne, et
• les deux canaux de sortie (CH1, CH2) sont connectés à la connexion en série d'enroulements de telle sorte que le premier canal de sortie (CH1) est connecté à la première borne et au nœud (N2) entre les deux enroulements secondaires (SW1a, SW1b), et le second canal de sortie (CH2) est connecté à la seconde borne.

6. Pilote de LED (1) selon la revendication 5, lorsque celle-ci dépend de la revendication 2, dans lequel
• l'anode de la première diode (D1) est connectée à la première borne de la connexion en série d'enroulements,
• le premier condensateur (C1) est connecté entre la cathode de la première diode (D1) et le nœud (N2) entre les deux enroulements secondaires (SW1a, SW1b), le nœud (N2) étant relié à la masse côté secondaire (SEC GND),
• l'anode de la seconde diode (D2) est connectée à la seconde borne de la connexion en série d'enroulements, et
• le second condensateur (C2) est connecté entre la cathode de la seconde diode (D2) et la masse côté secondaire (SEC GND).

7. Pilote de LED (1) selon l'une quelconque des revendications précédentes, dans lequel
• l'unité de commande (4) est configurée pour augmenter le rapport cyclique au-delà d'un seuil de rapport cyclique afin d'ajuster le rapport entre le premier courant (11) et le second courant (12) de sorte que l'un des deux courants soit supérieur à l'autre, plus le rapport cyclique dépasse le seuil, plus le courant correspondant est élevé et plus l'autre courant est faible; et
• l'unité de commande (4) est configurée pour diminuer le rapport cyclique en dessous dudit seuil afin d'ajuster le rapport entre le premier courant (11) et le second courant (12) de sorte que l'autre courant soit supérieur au premier, plus le rapport cyclique est en dessous du seuil, plus l'autre courant est élevé et plus le premier courant est faible.

8. Pilote de LED (1) selon l'une quelconque des revendications précédentes, dans lequel, dans le cas où le rapport cyclique est le rapport cyclique de la commutation d'un premier commutateur (S1) des deux commutateurs (S1, S2) du demi-pont (2), le premier commutateur (S1) étant configuré, à l'état conducteur, pour fournir la demi-onde positive du courant alternatif côté primaire à l'enroulement primaire (PW1) du transformateur (T1) :
• l'unité de commande (4) est configurée pour augmenter le rapport cyclique au-delà d'un seuil de rapport cyclique afin d'ajuster le rapport entre le premier courant (11) et le second courant (12) de sorte que le premier courant (11) soit supérieur au second courant (12), plus le rapport cyclique dépasse le seuil, plus le premier courant (11) est élevé et plus le second courant (12) est faible; et
• l'unité de commande (4) est configurée pour diminuer le rapport cyclique en dessous dudit seuil afin d'ajuster le rapport entre le premier courant (11) et le second courant (12) de sorte que le second courant (12) soit supérieur au premier courant (11), plus le rapport cyclique est en dessous du seuil, plus le second courant (12) est élevé et plus le premier courant (11) est faible.

9. Pilote de LED (1) selon l'une quelconque des revendications précédentes, dans lequel l'unité de commande (4) est configurée pour ajuster un courant global formé par le premier courant (11) et le second courant (12) en commandant la fréquence de commutation des deux commutateurs (S1, S2) du demi-pont (2).

10. Pilote de LED (1) selon l'une quelconque des revendications 3 à 6 ou l'une quelconque des revendications 7 à 9, lorsqu'il dépend de la revendication 3 ou 5, dans lequel
• dans le cas où l'ensemble d'enroulements secondaires (SW1) du transformateur (T1) est l'enroulement secondaire : le second enroulement primaire (PW2b) du transformateur supplémentaire (T2) est connecté à la seconde borne de l'enroulement secondaire; ou
• dans le cas où l'ensemble d'enroulements secondaires (SW1) du transformateur (T1) est la connexion en série d'enroulements :
▪ le premier enroulement primaire (PW2a) du transformateur supplémentaire (T2) est connecté à la première borne de la connexion en série d'enroulements, et
▪ le second enroulement primaire (PW2b) du transformateur supplémentaire (T2) est connecté à la seconde borne de la connexion en série d'enroulements.

11. Pilote de LED (1) selon la revendication 4 ou 6 ou l'une quelconque des revendications 7 à 10, lorsqu'il dépend de la revendication 4 ou 6, dans lequel
• dans le cas où l'ensemble d'enroulements secondaires (SW1) du transformateur (T1) est l'enroulement secondaire :
▪ le premier enroulement primaire (PW2a) du transformateur supplémentaire (T2) est connecté entre la première borne de l'enroulement secondaire et l'anode de la première diode (D1), et le second enroulement primaire (PW2b) du transformateur supplémentaire (T2) est connecté entre la seconde borne de l'enroulement secondaire et l'anode de la seconde diode (D2); ou
• dans le cas où l'ensemble d'enroulements secondaires (SW1) du transformateur (T1) est la connexion en série d'enroulements :
▪ le premier enroulement primaire (PW2a) du transformateur supplémentaire (T2) est connecté entre la première borne de la connexion en série d'enroulements et l'anode de la première diode (D1), et le second enroulement primaire (PW2b) du transformateur supplémentaire (T2) est connecté entre la seconde borne de la connexion en série d'enroulements et l'anode de la seconde diode (D2).

12. Pilote de LED (1) selon l'une quelconque des revendications précédentes, dans lequel l'enroulement secondaire (SW2) du transformateur supplémentaire (T2) comporte une première et une seconde borne, et le pilote de LED (1) comprend :
• un troisième condensateur (C3) disposé sur le côté primaire (PS) du pilote de LED (1) et connecté, via un circuit de redressement (D3, D4, D5, D6), à la première borne de l'enroulement secondaire (SW2) du transformateur supplémentaire (T2) afin de fournir à l'unité de commande (4) une première tension représentative du premier courant (11) lorsque le troisième courant traverse le troisième condensateur (C3); et
• un quatrième condensateur (C4) disposé sur le côté primaire (PS) du pilote de LED (1) et connecté, via le même circuit de redressement (D3, D4, D5, D6), à la seconde borne de l'enroulement secondaire (SW2) du transformateur supplémentaire (T2) afin de fournir à l'unité de commande (4) une seconde tension représentative du second courant (12) lorsque le troisième courant traverse le quatrième condensateur (C4).

13. Luminaire, comprenant :
• un pilote de LED (1) selon l'une quelconque des revendications précédentes,
et
• deux agencements de LED (5a, 5b);
dans lequel
• un premier agencement de LED (5a) des deux agencements de LED (5a, 5b) est connecté électriquement au premier canal de sortie (CH1) du pilote de LED (1), et un second agencement de LED (5b) des deux agencements de LED (5a, 5b) est connecté électriquement au second canal de sortie (CH2) du pilote de LED (1).

14. Procédé de fonctionnement d'un pilote de LED (1) à deux canaux de sortie (CH1, CH2), dans lequel le pilote de LED (1) comprend :
• un transformateur (T1) assurant une isolation galvanique entre un côté primaire (PS) et un côté secondaire (SS) du pilote de LED (1), le transformateur (T1) comportant un enroulement primaire (PW1) disposé sur le côté primaire (PS) et un ensemble d'enroulements secondaires (SW1) disposé sur le côté secondaire (SS),
• un demi-pont (2) comprenant deux commutateurs (S1, S2) disposés sur le côté primaire (PS) du pilote de LED (1) pour fournir, via un circuit résonant (3), un courant alternatif côté primaire à l'enroulement primaire (PW1) du transformateur (T1), le courant alternatif côté primaire provoquant un courant alternatif côté secondaire dans l'ensemble d'enroulements secondaires (SW1), et
• le circuit résonant (3) disposé sur le côté primaire (PS) du pilote de LED (1) et connecté électriquement entre l'enroulement primaire (PW1) du transformateur (T1) et un nœud (N1) situé entre les deux commutateurs (S1, S2) du demi-pont (2),
dans lequel
• les deux canaux de sortie (CH1, CH2) comprennent chacun un circuit de redressement (RF1, RF2) et sont disposés sur le côté secondaire (SS) du pilote de LED (1) et connectés électriquement à l'ensemble d'enroulements secondaires (SW1) du transformateur (T1) de sorte qu'en fonction du courant alternatif côté primaire, le circuit de redressement (RF1) d'un premier canal de sortie (CH1) fournit un premier courant (11) basé sur le courant alternatif côté secondaire de l'ensemble d'enroulements secondaires (SW1), et le circuit de redressement (RF2) d'un second canal de sortie (CH2) fournit un second courant (12) basé sur le courant alternatif côté secondaire de l'ensemble d'enroulements secondaires (SW1);
dans lequel les deux canaux de sortie (CH1, CH2) sont disposés sur le côté secondaire (SS) du pilote de LED (1) et connectés à l'ensemble d'enroulements secondaires (SW1) du transformateur (T1) de sorte que
• le circuit de redressement (RF2) du second canal de sortie (CH2) fournit le second courant (12) lorsqu'une demi-onde négative du courant alternatif côté primaire est appliquée à l'enroulement primaire (PW1) du transformateur (T1);
dans lequel
• le pilote de LED (1) comprend un transformateur supplémentaire (T2) pour fournir un troisième courant représentatif du premier courant (11) et du second courant (12) au côté primaire (PS) du pilote de LED (1), le transformateur supplémentaire (T2) comportant un premier et un second enroulement primaire (PW2a, PW2b) disposés sur le côté secondaire (SS) du pilote de LED (1) et un enroulement secondaire (SW2) disposé sur le côté primaire (PS) du pilote de LED (1);
• le premier et le second enroulement primaire (PW2a, PW2b) du transformateur supplémentaire (T2) sont connectés à l'ensemble d'enroulements secondaires (SW1) du transformateur (T1);
**caractérisé en ce que** le procédé comprend :
• ajuster le rapport entre le premier courant (11) et le second courant (12) en commandant le rapport cyclique de la commutation de l'un des deux commutateurs (S1, S2) du demi-pont (2); et
• commander la commutation des deux commutateurs (S1, S2) du demi-pont (2) sur la base du troisième courant.
